# EUROPEAN PATENT APPLICATION

(11) **EP 2 113 857 A1**
(43) Date of publication of application: **04.11.2009**
(21) Application number: 08300194.1
(22) Date of filing: 28.04.2008
(51) Int. Cl.: G06F 21/00, H04L 29/06, H04L 29/08, H04L 12/22

(54) **A method for secure content distribution**

(71) Applicant: THOMSON Licensing, 92100 Boulogne-Billancourt (FR)
(72) Inventor: Courtay, Olivier, 35000, Rennes (FR); Heen, Olivier, 35410, Domloup (FR); Prigent, Nicolas, 35000, RENNES (FR)
(74) Representative: Ruellan-Lemonnier, Brigitte

(57) **Abstract**

A method and system for wide release of a content (C) essentially at a given time to in a peer-to-peer network (200). Before time to, a storing peer (210A) pushes a protected version of the content ([C₂₋ₙ]) to at least one further peer (210B-210D) in the peer-to-peer network (200). Shortly before time to, information (C₁(K)) enabling generation of an unprotected version of the content (C) is provided to the at least one further peer (210B-210D). The at least one further peer (210B-210D) receives the protected version of the content ([C₂₋ₙ]); and uses the information (C₁(K)) enabling generation of an unprotected version of the content (C) to generate the unprotected version of the content. The method and system enables controlled wide release of the content even if the at least one further peer (210B-210D) is not controlled by the content owner.

## Description

### FIELD OF THE INVENTION

The present invention relates generally to digital content distribution, and in particular to content distribution in content distribution networks.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

There are today many different kinds of content distribution networks, such as for example Peer-to-Peer (P2P) networks that hereinafter will be used as a non-limitative example.

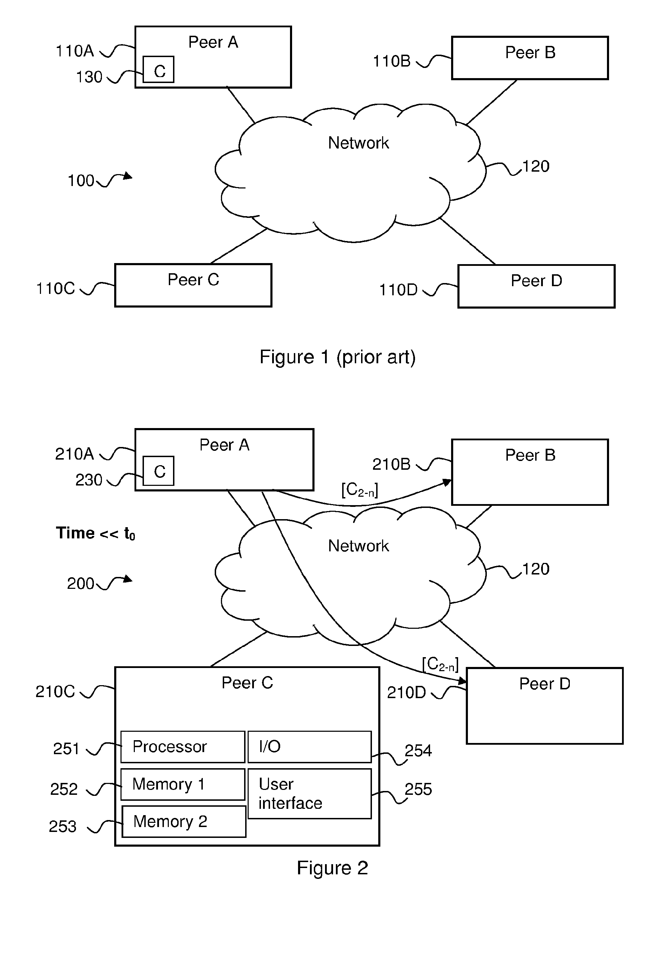

Figure 1 illustrates a typical prior art P2P network 100. The P2P network 100 comprises a plurality of peers 110A-110D (that may share reference number 110 when referred to as a group), functionally connected through a network 120, which commonly is the Internet. A first peer 110A stores a content 130 that it is willing to share with the other peers 110B-110D in the P2P network 100. Without going into specific details of just how a peer 110 may detect content on another peer 110, the other peers 110B-110D may download the content from the first peer 110 A.

It is possible that a large number of other peers want to download the content from the first peer 110A. However, when a peer has downloaded one part of a content file, it can share this part with further peers that then may download the part from both the first peer 110A and the peer that just downloaded the part. It will be appreciated that this system can reduce the load of a peer that initiates the content in the network 100. The more peers that download a content file, the more peers may offer the content file to further peers, which means that the system can be easily scalable to a large number of peers.

An intrinsic problem is the initial seed of a content, especially if this content is not supposed to be released before a certain time. In standard use of a P2P network 100, when a new file is shared by the first peer 100A, the number of peers that request the new file increases slowly, which means that first peer (also called "initial seeder") only serves few peers. Then, once the demand for the content has grown, a plurality of peers has already downloaded the content and can redistribute it. The bootstrap is thus slow. This is particularly problematic in the case of fresh content or pseudo-live content, i.e. content distributed with a small time shift. In "Incentives Build Robustness in BitTorrent", 2003, Bram Cohen proposes a solution that gives priority to the download of the content file that is the least widely distributed of the requested content files. This solution mitigates the problem somewhat.

The so-called flash crowd behaviour further worsens this problem. This happens when new content, which is much sought after, is shared and a great number of peers try to download it at essentially the same time. The initial peer cannot respond to all requests.

Naturally, a content provider with much hardware resources may release copies of the content on several fully controlled peers, but this only works when the content provider has a plurality of peers that it is willing to use for this purpose.

It will therefore be appreciated that there is a need for a solution that can allow to reduce the overload of the initial seeder and to enable increased spreading of content that is new to the network. This invention provides such a solution.

### SUMMARY OF THE INVENTION

In a first aspect, the invention is directed to a method of releasing content in a peer-to-peer network essentially at a given time. Before the given time, a storing peer pushes a protected version of the content to at least one further peer that is not controlled by the content owner. Shortly before the given time, providing to the at least one further peer information enabling, essentially by the given time, generation of an unprotected version of the content using the information and the protected version of the content. The unprotected version of the content is thus made available essentially by the given time, but not significantly before.

In a first preferred embodiment, the protected version of the content is protected by encryption using a key.

In a second preferred embodiment, the content comprises a plurality of chunks, and the protected version of the content does not comprise the first of the plurality of chunks. It is advantageous that the information enabling generation of an unprotected version of the content comprises a key necessary for decryption of the protected version of the content. The key necessary for decryption of the protected version of the content may be provided to the at least one further peer in a dedicated message. The key necessary for decryption of the protected version of the content may alternatively be provided to the at least one further peer by publication in a place from where the at least one further peer may retrieve the key necessary for decryption of the protected version of the content.

In a third preferred embodiment, an unprotected version of the content is generated by the at least one further peer.

In a second aspect, the invention is directed to a system for releasing content in a peer-to-peer network essentially at a given time. The system comprises a storing peer adapted to: before the given time, push a protected version of the content to at least one further peer in the peer-to-peer network, the at least one further peer not being controlled by the content owner; and shortly before time, provide to the at least one further peer information enabling, essentially by the given time, generation of an unprotected version of the content using the information and the protected version of the content. The system further comprises at least one further peer adapted to: receive the protected version of the content; and use the information enabling generation of an unprotected version of the content and the protected version of the content to generate the unprotected version of the content.

### BRIEF DESCRIPTION OF THE DRAWINGS

Preferred features of the present invention will now be described, by way of non-limiting example, with reference to the accompanying drawings, in which:
Figure 1, already described, illustrates a typical prior art content distribution network;
Figure 2-4 illustrate a content distribution network according to a preferred embodiment of the invention; and
Figure 5 illustrates a flow chart of a method for content distribution according to a preferred embodiment of the invention.

### PREFERRED EMBODIMENT OF THE INVENTION

The main idea of the invention is to achieve controlled wide release of a content item by using a solution contrary to the accepted wisdom in peer-to-peer networking. In the solution, a protected version of a content file is pre-pushed to a number of peers, which are not controlled by the content owner. At the time of release of the content, information enabling removal of the protection of the content item stored by the peers is made available to them.

Figures 2-4 illustrate a content distribution network according to a preferred embodiment of the invention. As a preferred but non-limitative example, the content distribution network is a P2P network 200. The P2P network 200 comprises a plurality of peers 210A-210D (that may be jointly referred to as 210) functionally connected by a network 120, that advantageously is the Internet. Peer A 210A stores a content file 230 that it is willing to share with the other peers 210B-210D after a certain time to but not before.

Peer C comprises a processor 251 adapted to execute computer programs, in particular a peer application necessary for partaking of the P2P network; a first memory 252 adapted to for short-term storage of for example intermediary calculations performed by the processor 251; a second memory 253 adapted for long-term storage of for example content; a communication unit (I/O) 254 adapted for communication with other devices; and a user interface 255 adapted for interaction with a user. For the sake of clarity, only those parts of Peer C that may be necessary for comprehension of the invention are shown; and these parts are only shown for Peer C, while it is to be understood that the other peers may comprise at least some of these parts.

Figure 2 further illustrates how, before time to, Peer A pushes a special version [C₂₋ₙ] of the content to Peer B and Peer D. In this case, the brackets indicate encryption. The special version [C₂₋ₙ] of the content comprises part of the content, preferably all the so-called chunks (chunks 2 to n) but the first, encrypted using a key K that is known only to Peer A. The key is preferably a key of a symmetric encryption algorithm; and it is further preferable that the same special version is sent to all the chosen receivers, which means that there is a single key K. It is preferable that this special version [C₂₋ₙ] of the content is linked to an identifier, which not necessarily corresponds to the name of the content C that will be used to show other peers downloadable content. The identifier is advantageously used for later pre-release identification, as will be described hereinafter. As an example, the name may be "A Summer of Dust" and the identifier may be "qwerty975cft"; the former being used for users to identify the content, the latter being used for P2P applications before time to. It is however also possible to use the name also as the identifier.

The skilled person will appreciate that Peer A does not share the content C at this time. The skilled person will also appreciate that it is not possible to simply pre-push copies of the content C to the peers if these are not fully controlled by the content owner, as this is likely to lead to anticipated release of the content.

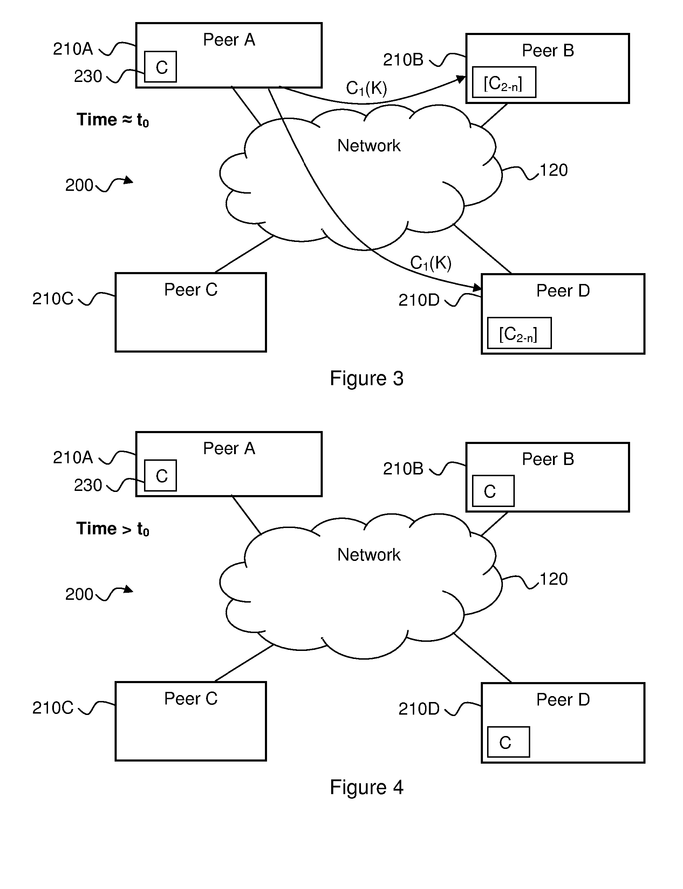

Figure 3 illustrates the network 200 around time to. As can be seen, Peer B and Peer D now store the special version [C₂₋ₙ] of the content. Around time to, Peer A sends the missing chunk C₁ that preferably comprises the key K to Peer B and Peer D. The missing chunk C₁ comprises the normal content information in its meta-data section. The key K is advantageously comprised in this meta-data section. The key K may also be sent separate from the missing chunk C₁, possibly in a separate transmission. The identifier is sent together with the missing chunk C₁, and with the key K if they are separated, so that a receiving peer may make the connection with the special version [C₂₋ₙ] of the content.

It should be noted that, in an alternative embodiment that uses asymmetric encryption, the key K sent to the peers is the decryption key (usually a public key) corresponding to the key used for encryption (usually a private key).

Peer B and Peer D store the missing chunk C₁ and the key K. It is now possible for the two peers to decrypt the special version [C₂₋ₙ] so as to obtain a decrypted version of the content C. It is also possible for a peer to put the first chunk C₁ and the special version [C₂₋ₙ] together without encryption of the latter, and also the key K, preferably comprised in the first section C₁. A downloading peer may then perform the decryption using key K, for example "on the fly" while rendering the content or before that.

Peer A may choose when to send the key K and the missing chunk C₁ to Peer B and Peer D. It may for example send the message at time to, at a time so that the peers will have received the message by time to, or so that the decryption is ready by time to. These are examples of what is meant by "about time t₀". It will be appreciated, however, that there is no big real difference in time between the examples. A further possibility is to publish the key K on for example a well-known web site from which any peer may download it. In this case, it is not necessary to push the key K to the peers that store the special version [C₂₋ₙ] of the content.

Figure 4 illustrates the network 200 after time to. As can be seen, Peer B and Peer D now store the content C in its downloadable and directly accessible version. Peer C may now choose from which peer 210 it wants to download the content C.

An advantage of the invention becomes apparent if Peer C represents thousands of peers that, shortly after time to, want to download the content C almost simultaneously. As there are now three servers that provide the content from time to, the burden is shared and distribution can be quicker.

The skilled person will appreciate that the invention may be used "on top" of any kind of Digital Rights Management (DRM) protection. This gives a kind of super-encryption of the content. An advantage is that the content as protected by the invention may not be accessed before time to, even if the DRM is broken.

In an alternative embodiment, the special version [C₂₋ₙ] of the content also comprises the first chunk C₁ that also is encrypted. Around time to, Peer A then pushes the key K to Peer B and Peer D (or publishes the key K, as described hereinbefore).

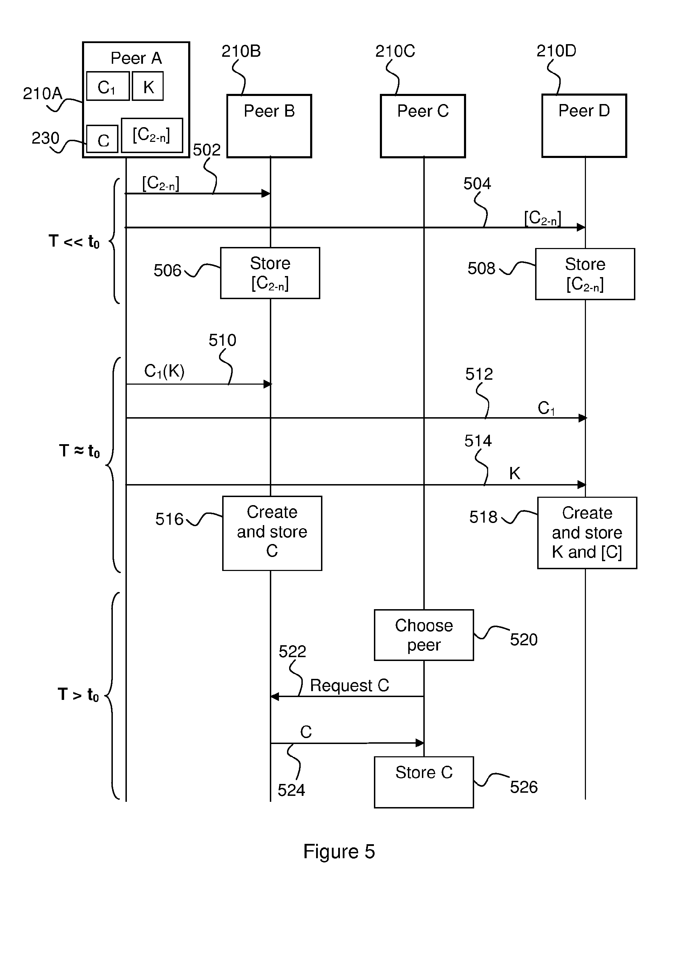

Figure 5 illustrates a flow chart of a method for content distribution according to a preferred embodiment of the invention. Figure 5 further illustrates the method described hereinbefore with reference to Figures 2-4. As described hereinbefore, Peer A stores an item of content C, a special version [C₂₋ₙ] of the content, at least one missing part C₁ of the content, and a key K used to encrypt the special version [C₂₋ₙ].

The method begins before time to when Peer A pushes 502, 504 the special version [C₂₋ₙ] to Peer B and Peer D that then store 506, 508 this special version [C₂₋ₙ].

At about time to, Peer A sends 510 a message comprising the missing part C₁ (comprising the key K in its meta-data section) to Peer B that creates and stores 516 an unencrypted version of the content C. Peer A also sends 512 the missing part C₁ to Peer D in a first message and then sends 514 the key K to Peer D in a second message. Peer D then creates an at least partly encrypted version [C] of the content that it stores together with the key K that advantageously is stored as meta-data for the content. It should be noted that it is preferred that the special version [C₂₋ₙ] is associated with an identifier that also is comprised in these later messages so that the peers may combine the special version [C₂₋ₙ] with the information in the messages.

After time to, Peer C chooses 520 a peer that shares the content using any suitable existing method. In the present example, Peer C chooses Peer B, from which it requests 522 and then downloads 524 the content C. The content C is then advantageously stored 526.

It will be appreciated that the invention may also be implemented using a server (not shown) that keeps track of which peers store what content. The server receives requests for content from peers and returns information, such as for example tokens, about where the content may be found and downloaded.

It will also be appreciated that the storing peer 210A may also be uncontrolled by the content owner. This may be the case if the content owner has no access to the peer-to-peer network 200.

The invention is suitable for use with any kind of distributed content, but it is particularly suited for high-value content that is susceptible to be much desired when it is released.

It can thus be seen that the present invention provides a solution that can avoid bandwidth overload of the initial seeder as the content is pre-distributed to a number of other peers in a secure manner that counters leaks of the content before a certain time, such as an official release date to. The present invention can also be made independent of any DRM style protection of the content.

It will be appreciated that the present invention can be implemented without adding additional chunks to the content.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of releasing content (C) in a peer-to-peer network (200) essentially at a given time, the method comprising the steps of:
before the given time, pushing a protected version of the content ([C₂₋ₙ]) from a storing peer (210A) to at least one further peer (210B-210D) in the peer-to-peer network (200), the at least one further peer (210B-210D) not being controlled by the content owner; and
shortly before the given time, providing to the at least one further peer (210B-210D) information (C₁(K)) enabling, essentially by the given time, generation of an unprotected version of the content (C) using the information and the protected version of the content ([C₂₋ₙ]).

2. The method of claim 1, wherein the protected version of the content ([C₂₋ₙ]) is protected by encryption using a key (K).

3. The method of claim 2, wherein the content comprises a plurality of chunks, and the protected version of the content ([C₂₋ₙ]) does not comprise the first of the plurality of chunks.

4. The method of claim 2, wherein the information (C₁(K)) enabling generation of an unprotected version of the content (C) comprises a key (K) necessary for decryption of the protected version of the content ([C₂₋ₙ]).

5. The method of claim 4, wherein the key (K) necessary for decryption of the protected version of the content ([C₂₋ₙ]) is provided to the at least one further peer (210B-210D) in a dedicated message.

6. The method of claim 4, wherein the key (K) necessary for decryption of the protected version of the content ([C₂₋ₙ]) is provided to the at least one further peer (210B-210D) by publication in a place from where the at least one further peer (210B-210D) may retrieve the key (K) necessary for decryption of the protected version of the content ([C₂₋ₙ]).

7. The method of claim 1, further comprising generation of an unprotected version of the content (C) by the at least one further peer (210B-210D).

8. A system for releasing content (C) in a peer-to-peer network (200) essentially at a given time, the system comprising:
a storing peer (210A) adapted to:
before the given time, push a protected version of the content ([C₂₋ₙ]) to at least one further peer (210B-210D) in the peer-to-peer network (200), the at least one further peer (210B-210D) not being controlled by the content owner; and
shortly before time, provide to the at least one further peer (210B-210D) information (C₁(K)) enabling, essentially by the given time, generation of an unprotected version of the content (C) using the information (C₁(K)) and the protected version of the content ([C₂₋ₙ]); and
at least one further peer (210B-210D) adapted to:
receive the protected version of the content ([C₂₋ₙ]); and
use the information (C₁(K)) enabling generation of an unprotected version of the content (C) and the protected version of the content ([C₂-_{n]}) to generate the unprotected version of the content.
